# EUROPEAN PATENT SPECIFICATION

(11) **EP 2 343 574 B1**
(45) Date of publication and mention of the grant of the patent: **31.07.2013**
(21) Application number: 10195121.8
(22) Date of filing: 15.12.2010
(51) Int. Cl.: G01V 1/38

(54) **System for adjusting geophysical sensor streamer front end towing depth**
System zur Einstellung der Schlepptiefe des Vorderteils eines geophysikalischen Sensorstreamers
Système permettant d'ajuster la profondeur de remorquage avant de flûte de capteur géophysique

(30) Priority: 30.12.2009 US 655417
(43) Date of publication of application: 13.07.2011
(73) Proprietor: PGS Geophysical AS, 1366 Lysaker (NO)
(72) Inventor: Karlsen, Kenneth, 6019, Aaelesund (NO); Austad, Martin, 0279, Oslo (NO); Ronaess, Marit, 1346, Gjettum (NO); Edland, Svend, 1385, Asker (NO); Rossberg, Knut, 5414, Stord (NO); Harrick, Bruce William, Cypress TX 77433 (US)
(74) Representative: Skone James, Robert Edmund

(56) References cited:
- FR-A1- 2 611 917
- GB-A- 2 414 804
- GB-A- 2 443 843
- GB-A- 2 454 802
- US-A- 5 138 582
- US-A1- 2006 176 774

## Description

### Background of the Invention

### Field of the Invention

The invention relates generally to the field of marine geophysical surveying using towed streamers. More specifically, the invention relates to devices for controlling the towing depth of forward end of a geophysical sensor streamer.

### Background Art

Marine geophysical surveying includes seismic surveying systems. Seismic survey systems are used to acquire seismic data from Earth formations below the bottom of a body of water, such as a lake or the ocean. Marine seismic surveying systems typically include a seismic vessel having onboard navigation, seismic energy source control, and data recording equipment. The seismic vessel is typically configured to tow one or more streamers through the water. At selected times, the seismic energy source control equipment causes one or more seismic energy sources (which may be towed in the water by the seismic vessel or by another vessel) to actuate. Signals produced by various sensors on the one or more streamers are ultimately conducted to the recording equipment, where a record with respect to time is made of the signals produced by each sensor (or groups of such sensors). The recorded signals are later interpreted to infer the structure and composition of the Earth formations below the bottom of the body of water.

The one or more streamers are in the most general sense long cables that have seismic sensors disposed at spaced apart positions along the length of the cables. A typical streamer can extend behind the seismic vessel for several kilometers. Because of the great length of the typical streamer, the streamer may not travel entirely in a straight line behind the seismic vessel at every point along its length due to interaction of the streamer with the water and currents in the water, among other factors.

More recently, marine seismic acquisition systems have been designed that include a plurality of such streamers towed by the seismic vessel in parallel. The streamers are towed by the vessel using towing devices, and associated equipment that maintain the streamers at selected lateral distances from each other as they are towed through the water. Such multiple streamer systems are used in what are known as three dimensional and four dimensional seismic surveys. A four dimensional seismic survey is a three dimensional survey over a same area of the Earth's subsurface repeated at selected times. The individual streamers in such systems are affected by the same forces that affect a single streamer.

The quality of images of the Earth's subsurface produced from three dimensional seismic surveys is affected by how well the positions of the individual sensors on the streamers are controlled. The quality of images generated from the seismic signals also depends to an extent on the relative positions of the seismic receivers being maintained throughout the seismic survey. Various devices are known in the art for positioning streamers laterally and/or at a selected depth below the water surface. U.S. Patent No. 5,443,027 issued to Owsley et al., for example, describes a lateral force device for displacing a towed underwater acoustic cable that provides displacement in the horizontal and vertical directions. The device has a hollow spool and a rotationally mounted winged fuselage. The hollow spool is mounted on a cable with cable elements passing therethrough. The winged fuselage is made with the top half relatively positively buoyant and the bottom half relatively negatively buoyant. The winged fuselage is mounted about the hollow spool with clearance to allow rotation of the winged fuselage. The difference in buoyancy between the upper and lower fuselage maintains the device in the correct operating position. Wings on the fuselage are angled to provide lift in the desired direction as the winged fuselage is towed through the water. The device disclosed in the Owsley et al. patent provides no active control of direction or depth of the streamer, however.

U.S. Patent No. 6,011,752 issued to Ambs et al. describes a seismic streamer position control module having a body with a first end and a second end and a bore therethrough from the first end to the second end for receiving a seismic streamer. The module has at least one control surface, and at least one recess in which is initially disposed the at least one control surface. The at least one control surface is movably connected to the body for movement from and into the at least one recess and for movement, when extended from the body, for attitude adjustment. Generally, the device described in the Ambs et al. patent is somewhat larger diameter, even when closed, than the streamer to which it is affixed, and such diameter may become an issue when deploying and retrieving streamers from the water.

U.S. Patent No. 6,144,342 issued to Bertheas et al. describes a method for controlling the navigation of a towed seismic streamer using "birds" affixable to the exterior of the streamer. The birds are equipped with variable-incidence wings and are rotatably fixed onto the streamer. Through a differential action, the wings allow the birds to be turned about the longitudinal axis of the streamer so that a hydrodynamic force oriented in any given direction about the longitudinal axis of the streamer is obtained. Power and control signals are transmitted between the streamer and the bird by rotary transformers. The bird is fixed to the streamer by a bore closed by a cover. The bird can be detached automatically as the streamer is raised so that the streamer can be wound freely onto a drum. The disclosed method purportedly allows the full control of the deformation, immersion and heading of the streamer.

It is also important to control the depth of the streamers in the water so that effects of seismic signal reflection from the water-air interface can be controlled. There exists a need for devices to control the depth of the forward end of a streamer in a streamer array in the water.

While the explanation of the need for the invention is generally explained in terms of seismic surveying, it is important to recognize that the invention is applicable to any survey system which includes a plurality of laterally spaced apart sensor streamers towed by a vessel. Such other types of streamers may include, without limitation, electrodes, magnetometers and temperature sensors. Accordingly, the invention is not limited in scope to seismic streamers. US5138582A, GB2454802A and US20060176774A all disclose systems for maintaining the position of seismic sensor streamers in a body of water.

### Summary of the Invention

In a first aspect, the invention consists in a system for towing marine geophysical sensor streamers, comprising:
a plurality of lead in lines extending from a tow vessel, wherein for each lead in line there is:
   a streamer front end termination coupled to an aft end of the lead in line;
   a sensor streamer coupled at a forward end thereof to the front end termination, the sensor streamer including a plurality of geophysical sensors disposed at spaced apart locations along its length;
   a floatation device coupled by a line extending therefrom to proximate the forward end of the sensor streamer;
   a winch disposed on the floatation device to extend and retract the line;
   a depth sensor, such as a pressure sensor, disposed proximate the forward end of the sensor streamer; and
   a controller in signal communication with the winch and the depth sensor so that the forward end of the sensor streamer is maintained at a selected depth in the body of water; and
a depressor coupled proximate a forward end of laterally outwardmost ones of the sensor streamers.

The depressor applies downward force proximate to the front end termination in a body of water.

In a second aspect, the invention consists in a method for towing sensor streamers in a body of water, comprising:
extending each of a plurality of lead in lines from a tow vessel moving in the body of water to laterally spaced apart respective front end terminations, the front end terminations each coupled to a forward end of a respective sensor streamer disposed in the body of water, each sensor streamer including a plurality of geophysical sensors disposed at spaced apart locations along its length;
suspending each of the sensor streamers from a point proximate their forward ends from a floatation device near the surface of the body of water;
adjusting the length of a line extending between each suspension point and each floatation device so that each suspension point is maintained at a selected depth in the body of water; and
applying a downward force proximate the suspension point of laterally outwardmost ones of the sensor streamers.

In some examples, the downward force is applied proximate to the front end termination.

Other aspects and advantages of the invention will be apparent from the following description and the appended claims.

### Brief Description of the Drawings

FIG. 1 is an oblique view of a sensor streamer system using streamer front end depth control devices according to the invention.

FIG. 2 shows one of the combination floatation device and winch units of FIG. 1 in more detail.

### Detailed Description

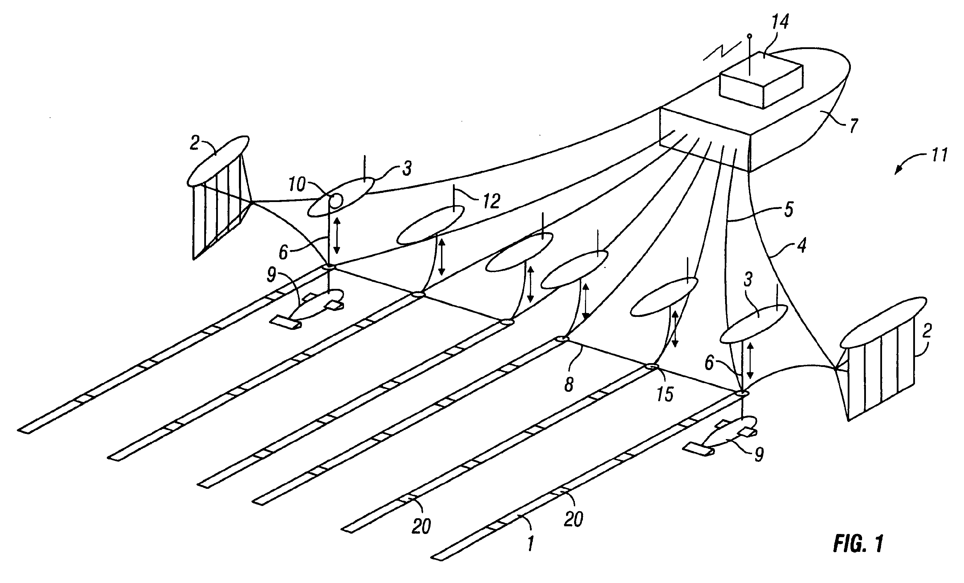

A geophysical sensor streamer array towed by a survey vessel is shown in oblique view in FIG. 1. The vessel 7 moves along the surface of a body of water 11. The vessel 7 includes thereon survey acquisition equipment, shown generally at 14 and referred to for convenience as a "recording system" 14. The recording system 14 includes (none shown separately) devices for determining geodetic position of the vessel 7, devices for recording signals generated by each of a plurality of geophysical sensors 20, devices for actuating a geophysical energy source (not shown in FIG. 1) if such source is used, and in some examples, devices for controlling deployment of one or more streamer front end winches 10, each deployed in a respective floatation device 3.

The vessel 7 may tow one or more sensor streamers 1. The streamers 1 may each be coupled to a lead in cable 5, which transfers motion of the vessel 7 to the forward end of each steamer 1 through a front end termination 15. If a plurality of streamers 1 is used, as shown in FIG. 1, typically the streamers 1 will be towed at laterally spaced apart positions behind the survey vessel 7. Lateral separation may be obtained by deploying a deflector or "paravane" 2 at the end of each of two paravane ropes 4 (also known as a "super wide" rope). The paravanes 2 generate force transversely outward from the direction of motion of the vessel 7, and apply such lateral force to spreader cables 8 connected thereto and between the streamer front end termination 15. As shown in FIG. 1, which is one possible configuration, there is no spreader cable 8 between the two centremost streamer front end connections 15.

The streamers 1 each have a plurality of geophysical sensors 20 deployed along the length of the streamer 1. In the present example, the geophysical sensors may be substantially collocated seismic particle motion sensors and pressure time gradient sensors (not shown separately). An example of such sensing devices in a marine streamer and the construction thereof are shown in U.S. Patent No. 7,239,577 issued to Tenghamn et al. and commonly owned with the present invention. It should be clearly understood that the invention is equally applicable with any other type of geophysical sensor that can be towed in a body of water and may be required to be maintained at a selected depth in the body of water during survey operations. Accordingly, the type of geophysical sensor is not a limit on the scope of the present invention.

In the present example, in which the streamers 1 include the above described collocated pressure and motion responsive sensors, it may be required to operate the streamers 1 at a selected depth in the water that is greater than would occur as a result of the combination of forces acting on the streamer (e.g., streamer buoyancy, lateral pull from the paravanes, towing, water drag, weight of the front end terminations and lead in cables, etc.). In the present example, therefore, a depressor 9 may be coupled to each laterally outermost streamer 1 proximate each front end termination 15. Other examples may include a depressor coupled proximate each front end termination 15 on each streamer 1. The depressor 9 may be a simple weight to provide negative buoyancy (downward) force, or may be a device that generates hydrodynamic lift in a downward direction as a result of motion through the water 11. If the depressor 9 is a weight, such as a lead or other dense material weight, the external shape thereof may be unimportant, although it may be preferable to provide the weight with a shape selected to reduce frictional force of motion through the water 11. A hydrodynamic depressor may include combinations of projections as suggested in FIG. 1 from the body of the depressor 9 to cause downward hydrodynamic lift. The direction and amount of hydrodynamic lift may be controlled in some examples. Devices that can provide controllable hydrodynamic lift are described, for example in U.S. Patent No. 7,457,193 issued to Pramik and commonly owned with the present invention. Other examples are described in the references cited in the Background section herein. The purpose for using the depressor 9 is that the deflectors 2 used to obtain the necessary streamer lateral spread are typically towed at or near the water surface, and tend to pull the streamer spreader cables 8 upwardly when the desired streamer tow depth is deeper than the tow point of the spreader cables 8 on the deflector 2. Such arrangement is typical. Thus, application of the depressor 9 proximate the front end termination 15 of at least the laterally outwardmost streamers 1 will cause the front end of the respective streamers 1 to move downwardly in the water 11.

In other examples, the geophysical sensors may be of a type that does not require towing the streamers 1 at greater depths than would occur as a result of the above-described forces acting on the various components of the acquisition system deployed in the water 11. In such cases, the depressor 9 may be omitted, and depth proximate the front end of each streamer 1 may be maintained using devices explained below.

The streamers 1 may include (not shown in FIG.1 for clarity) a plurality of longitudinally spaced apart lateral force and depth control devices to maintain the depth and lateral position of each streamer at the selected positions. Such devices are described, for example, in U.S. Patent No. 6,144,342 issued to Bertheas et al.

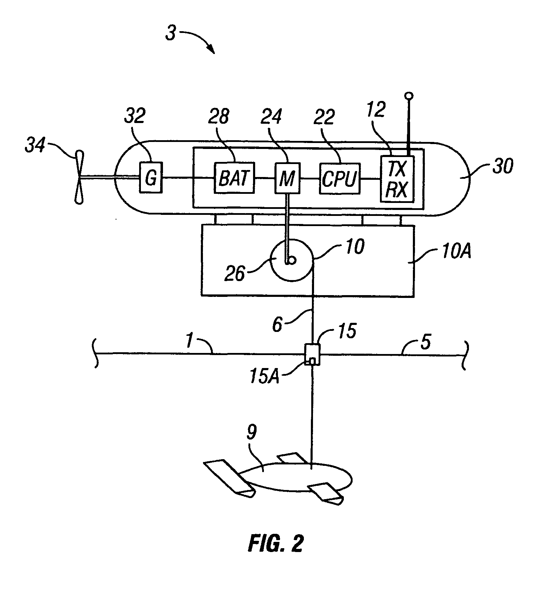

In the present invention, each streamer 1 may be coupled proximate the front end termination 15 to a respective floatation device 3 that moves along the water surface proximate the respective front end termination 15. The coupling may be performed using a line or rope 6 coupled to the streamer 1 proximate the front end termination 15 at one end and the other end to a winch 10 on board the floatation device 3. Operation of the winch 10 may controlled by the recording system 14 using a radio link 12 or similar radio frequency communication device. Other examples may provide for automatic winch operation at the floatation device 3 as will be explained with reference to FIG. 2. Each front end termination 15 may include a depth sensor 15A (see FIG. 2) associated therewith, such as a pressure sensor, also in signal communication with the recording unit 14 or devices in the floatation unit described below. When it is desired to maintain the streamer front end terminations 15 at a selected depth in the water 11, the recording system 14 may be programmed to operate the winch 10 (or to program a winch controller in the floatation device 3 as explained with reference to FIG. 2) in each floatation device 3 in response to signals from the respective pressure (depth) sensors 15A (FIG. 2). In other examples, a sensor (not shown) that measures rotation of the winch 10 may be used as an indicator of the depth of the front end of the streamer 1. The term "depth sensor" as used herein is intended to include the foregoing two example sensors and any other sensing element that generates a signal corresponding to the depth proximate the front end of the streamer 1 in the water 11 or the length of the line 6 deployed by each winch 10.

One of the floatation devices 3 with included winch 10 is shown in more detail in FIG. 2. The floatation device 3 may include an enclosed chamber 30 filled with incompressible, low density liquid or foam or other buoyant material to resist hydrostatic crushing and to provide buoyant force to the front end the streamer 1. On the exterior of or in the chamber 30, or in a selected subchamber therein may be disposed the following components of a depth control system for the streamer front end termination 15. A transceiver 12 is in radio or other signal communication with the recording system (14 in FIG. 12). Signals from the transceiver 12 may be communicated to a central processor 22 such as a microcontroller. The central processor 22 can generate signals to drive an electric motor 24. The motor 24 may include suitable components on its output shaft to rotate the winch 10 to extend and retract the line 6 that couples the streamer front end termination 15 to the floatation device 10. The winch 10 may include a slip ring 26 to enable electrical and/or optical signals from the pressure (depth) sensor 15A to be communicated to the central processor 22 and ultimately (by the transceiver 12) to the recording unit (14 in FIG. 1). In other examples, signals from the depth sensor 15A may be communicated over the lead in line 6 to the recording system (14 in FIG. 1). Electrical power to operate the foregoing components may be stored in or provided by a battery 28. To supplement battery power and/or to charge the battery 28, the floatation device 3 may include an electrical generator 32 that is rotated by a propeller or turbine 34 in response to motion of the floatation device 3 in the water during operations.

The depressor 9 is shown in FIG. 2 to illustrate the relative positioning thereof with respect to the floatation device 3. The example depressor in FIG. 2 may be one of the devices explained above that generates controllable downward hydrodynamic lift as the depressor 9 is moved through the water 11. As explained above with reference to FIG. 1, signals from the depth sensor 15A may be communicated to the recording system (14 in FIG. 1), which retransmits a signal to the controller 22 to operate the winch 10 to maintain a selected depth in the water. Alternatively, the depth may be programmed into the controller 22, and the depth can be maintained automatically. Changes to the maintained depth may be communicated to the controller 22 from the recording system 14 as required. A system according to the present invention may provide more precise sensor array geometry than is possible using prior art array geometry control devices. The system of the present invention also has the capability to change the depth of the front end of geophysical survey streamers during operations as needed to meet changing survey conditions.

A streamer system according to the various aspects of the invention may enable more precise geophysical surveying by maintaining the forward ends of the streamer(s) at selected depths in the water.

## Claims

1. A system for towing marine geophysical sensor streamers (1), comprising:
a plurality of lead in lines (5) extending from a tow vessel (7), wherein for each lead in line there is:
a streamer front end termination (15) coupled to an aft end of the lead in line;
a sensor streamer (1) coupled at a forward end thereof to the front end termination, the sensor streamer including a plurality of geophysical sensors (20) disposed at spaced apart locations along its length;
a floatation device (3) coupled by a line (6) extending therefrom to proximate the forward end of the sensor streamer;
a winch (10) disposed on the floatation device to extend and retract the line;
a depth sensor (15A), disposed proximate the forward end of the sensor streamer; and
a controller (22) in signal communication with the winch and the depth sensor so that the forward end of the sensor streamer is maintained at a selected depth in the body (11) of water; and
a depressor (9) coupled proximate a forward end of laterally outwardmost ones of the sensor streamers.

2. The system of claim 1, further comprising, associated with each floatation device (3), a battery (28) coupled to the winch (10) and to the controller (22) to provide power thereto, and an electric generator (32) coupled to the battery, the generator being driven in response to motion of the floatation device in the body (11) of water.

3. The system of claim 1 or claim 2, further comprising, disposed on each floatation device (3), a radio frequency transceiver (12, 14) and on the tow vessel (7), whereby signals related to the selected depth in the body (11) of water are communicated.

4. The system of any one of the preceding claims, wherein the depressors (9) apply downward force to the forward end of the streamer to which they are coupled in the body (11) of water.

5. The system of any one of the preceding claims, wherein the geophysical sensors (20) are either electrodes, magnetometers or temperature sensors, or the geophysical sensors are collocated seismic particle motion sensors and pressure time gradient sensors.

6. The system of any one of the preceding claims, wherein the depth sensors (15A) are pressure sensors.

7. The system of any one of claims 1 to 5, wherein each depth sensor (15A) measures rotation of a winch (10).

8. A method for towing sensor streamers (1) in a body (11) of water, comprising:
extending each of a plurality of lead in lines (5) from a tow vessel (7) moving in the body of water to laterally spaced apart respective front end terminations (15), the front end terminations each coupled to a forward end of a respective sensor streamer (1) disposed in the body of water, each sensor streamer including a plurality of geophysical sensors (20) disposed at spaced apart locations along its length;
suspending each of the sensor streamers from a point proximate their forward ends from a floatation device (3) near the surface of the body of water;
adjusting the length of a line (6) extending between each suspension point and each floatation device so that each suspension point is maintained at a selected depth in the body of water; and
applying a downward force proximate the suspension point of laterally outwardmost ones of the sensor streamers.

9. The method of claim 8, wherein a depth in the water of the forward end of each streamer (1) is determined by measuring pressure in the body (11) of water.

10. The method of claim 9, wherein the applying a downward force comprises affixing a weight (9) proximate the suspension points of the laterally outwardmost sensor streamers. (1).

11. The method of claim 8 or claim 9, wherein the applying a downward force comprises generating downward hydrodynamic lift proximate the suspension points of the laterally outwardmost sensor streamers (1).

12. The method of any one of claims 8 to 11, wherein the geophysical sensors (20) are either electrodes, magnetometers or temperature sensors, or the geophysical sensors are collocated seismic particle motion sensors and pressure time gradient sensors.

13. The method of any one of claims 8 to 12, further comprising determining the depth in the body (11) of water of the forward end of a sensor streamer (1) by measuring rotation of a winch (10) disposed on the floatation device (3) from which the sensor streamer is suspended, the rotation adjusting the length of the line (6).

## Patentansprüche

1. System zum Schleppen von marinen geophysikalischen Sensorstreamern (1), umfassend:
eine Vielzahl von Zuführungsleinen (5), die von einem Schleppschiff (7) aus verlaufen, wobei für jede Zuführungsleine Folgendes vorhanden ist:
ein Streamer-Vorderteilanschluss (15), der mit einem hinteren Ende der Zuführungsleine verbunden ist;
ein Sensorstreamer (1), der an einem vorderen Ende davon mit dem Vorderteilanschluss verbunden ist, wobei der Sensorstreamer eine Vielzahl geophysikalischer Sensoren (20) enthält, die an beabstandeten Stellen entlang seiner Länge angeordnet sind;
eine Schwimmvorrichtung (3), die mit einer von dort aus verlaufenden Leine (6) mit nahe dem vorderen Ende des Sensorstreamers verbunden ist;
eine Winde (10), die an der Schwimmvorrichtung angeordnet ist, um die Leine auszulegen und einzuholen;
ein Tiefensensor (15A), der nahe dem vorderen Ende des Sensorstreamers angeordnet ist; und
eine Steuereinheit (22) im Signalaustausch mit der Winde und dem Tiefensensor, sodass das vordere Ende des Sensorstreamers in einer ausgewählten Tiefe im Gewässer (11) gehalten wird; und
einen Depressor (9), der nahe einem vorderen Ende von seitlich am weitesten außen befindlichen Sensorstreamern angekoppelt ist.

2. System nach Anspruch 1, ferner umfassend, zugehörig zu jeder Schwimmvorrichtung (3), eine Batterie (28), die mit der Winde (10) und der Steuereinheit (22) verbunden ist, um sie mit Strom zu versorgen, und einen Stromgenerator (32), der mit der Batterie verbunden ist, wobei der Generator als Reaktion auf die Bewegung der Schwimmvorrichtung im Gewässer (11) angetrieben wird.

3. System nach Anspruch 1 oder Anspruch 2, ferner umfassend, angeordnet an jeder Schwimmvorrichtung (3), einen Hochfrequenz-Transceiver (12, 14) und an dem Schleppschiff (7), womit auf die ausgewählte Tiefe im Gewässer (11) bezogene Signale übertragen werden.

4. System nach einem der vorhergehenden Ansprüche, bei dem die Depressoren (9) im Gewässer (11) eine nach unten gerichtete Kraft auf das vordere Ende des Streamers ausüben, mit dem sie verbunden sind.

5. System nach einem der vorhergehenden Ansprüche, bei dem es sich bei den geophysikalischen Sensoren (20) entweder um Elektroden, Magnetometer oder Temperatursensoren handelt oder es sich bei den geophysikalischen Sensoren um gemeinsam angeordnete seismische Partikelbewegungssensoren und Druck-Zeit-Gradientensensoren handelt.

6. System nach einem der vorhergehenden Ansprüche, wobei die Tiefensensoren (15A) Drucksensoren sind.

7. System nach einem der Ansprüche 1 bis 5, wobei jeder Tiefensensor (15A) die Drehung einer Winde (10) misst.

8. Verfahren zum Schleppen von Sensorstreamern (1) in einem Gewässer (11), umfassend:
Auslegen von jeder aus einer Vielzahl von Zuführungsleinen (5) von einem Schleppschiff (7), das sich im Gewässer bewegt, zu seitlich beabstandeten jeweiligen Vorderteilanschlüssen (15), wobei die Vorderteilanschlüsse jeweils mit einem vorderen Ende eines jeweiligen Sensorstreamers (1) verbunden sind, der im Gewässer angeordnet ist, wobei jeder Sensorstreamer eine Vielzahl von geophysikalischen Sensoren (20) aufweist, die an beabstandeten Stellen entlang seiner Länge angeordnet sind;
Aufhängen von jedem der Sensorstreamer von einem Punkt nahe ihrer vorderen Enden von einer Schwimmvorrichtung (3) nahe der Gewässeroberfläche;
Einstellen der Länge einer Leine (6), die zwischen jedem Aufhängepunkt und jeder Schwimmvorrichtung verläuft, sodass jeder Aufhängepunkt in einer ausgewählten Tiefe im Gewässer gehalten wird; und
Ausüben einer nach unten gerichteten Kraft nahe dem Aufhängepunkt von seitlich am weitesten außen befindlichen Sensorstreamern.

9. Verfahren nach Anspruch 8, wobei eine Tiefe des vorderen Endes jedes Streamers (1) im Wasser durch Messen des Drucks im Gewässer (11) ermittelt wird.

10. Verfahren nach Anspruch 9, wobei das Ausüben einer nach unten gerichteten Kraft das Befestigen eines Gewichts (9) nahe der Aufhängepunkte der seitlich am weitesten außen befindlichen Sensorstreamer (1) umfasst.

11. Verfahren nach Anspruch 8 oder Anspruch 9, wobei das Ausüben einer nach unten gerichteten Kraft das Erzeugen eines nach unten gerichteten hydrodynamischen Auftriebs nahe der Aufhängepunkte der seitlich am weitesten außen befindlichen Sensorstreamer (1) umfasst.

12. Verfahren nach einem der Ansprüche 8 bis 11, bei dem es sich bei den geophysikalischen Sensoren (20) entweder um Elektroden, Magnetometer oder Temperatursensoren handelt oder es sich bei den geophysikalischen Sensoren um gemeinsam angeordnete seismische Partikelbewegungssensoren und Druck-Zeit-Gradientensensoren handelt.

13. Verfahren nach einem der Ansprüche 8 bis 12, ferner umfassend das Ermitteln der Tiefe des vorderen Endes eines Sensorstreamers (1) in dem Gewässer (11) durch Messen der Drehung einer Winde (10), die an der Schwimmvorrichtung (3) angeordnet ist, von der aus der Sensorstreamer aufgehängt wird, wobei mit der Drehung die Länge der Leine (6) eingestellt wird.

## Revendications

1. Système de remorquage de flûtes de capteur géophysique marines (1), comprenant :
une pluralité de lignes de guidage d'entrée (5) s'étendant à partir d'un navire de remorquage (7), dans lequel, pour chaque ligne de guidage d'entrée, il y a :
une terminaison d'extrémité avant de flûte (15) couplée à une extrémité arrière de la ligne de guidage d'entrée ;
une flûte de capteur (1) couplée au niveau d'une extrémité antérieure de celle-ci à la terminaison d'extrémité avant, la flûte de capteur incluant une pluralité de capteurs géophysiques (20) disposés en des emplacements espacés le long de sa longueur ;
un dispositif de flottation (3) couplé par une ligne (6) s'étendant à partir de celui-ci pour se rapprocher de l'extrémité antérieure de la flûte de capteur ;
un treuil (10) disposé sur le dispositif de flottation pour étendre et rétracter la ligne ;
un capteur de profondeur (15A), disposé à proximité de l'extrémité antérieure de la flûte de capteur ; et
un dispositif de commande (22) en communication de signal avec le treuil et le capteur de profondeur de sorte que l'extrémité antérieure de la flûte de capteur soit maintenue à une profondeur sélectionnée dans la masse (11) d'eau ; et
un dépresseur (9) couplé à proximité d'une extrémité antérieure des flûtes de capteur les plus à l'extérieur latéralement.

2. Système selon la revendication 1, comprenant en outre, associés à chaque dispositif de flottation (3), une batterie (28) couplée au treuil (10) et au dispositif de commande (22) pour leur fournir de la puissance, et un générateur électrique (32) couplé à la batterie, le générateur étant entraîné en réponse au mouvement du dispositif de flottation dans la masse (11) d'eau.

3. Système selon la revendication 1 ou la revendication 2, comprenant en outre, disposé sur chaque dispositif de flottation (3), un émetteur-récepteur de radiofréquence (12, 14) et sur le navire de remorquage (7), moyennant quoi des signaux liés à la profondeur sélectionnée dans la masse (11) d'eau sont communiqués.

4. Système selon l'une quelconque des revendications précédentes, dans lequel les dépresseurs (9) appliquent une force vers le bas à l'extrémité antérieure de la flûte à laquelle ils sont couplés dans la masse (11) d'eau.

5. Système selon l'une quelconque des revendications précédentes, dans lequel les capteurs géophysiques (20) sont des électrodes, des magnétomètres ou des capteurs de température, ou les capteurs géophysiques sont des capteurs sismiques de mouvement de particules et des capteurs de gradient de temps de pression colocalisés.

6. Système selon l'une quelconque des revendications précédentes, dans lequel les capteurs de profondeur (15A) sont des capteurs de pression.

7. Système selon l'une quelconque des revendications 1 à 5, dans lequel chaque capteur de profondeur (15A) mesure la rotation d'un treuil (10).

8. Procédé de remorquage de flûtes de capteur (1) dans une masse (11) d'eau, comprenant :
l'extension de chacune d'une pluralité de lignes de guidage d'entrée (5) à partir d'un navire de remorquage (7) se déplaçant dans la masse d'eau vers les terminaisons d'extrémité avant (15) respectives latéralement espacées, les terminaisons d'extrémité avant étant chacune couplée à une extrémité antérieure d'une flûte de capteur (1) respective disposée dans la masse d'eau, caque flûte de capteur comprenant une pluralité de capteurs géophysiques (20) disposés en des emplacements espacés le long de sa longueur ;
la suspension de chacune des flûtes de capteur à partir d'un point à proximité de leurs extrémités antérieures depuis un dispositif de flottation (3) près de la surface de la masse d'eau ;
l'ajustement de la longueur d'une ligne (6) s'étendant entre chaque point de suspension et chaque dispositif de flottation, de sorte que chaque point de suspension soit maintenu à une profondeur sélectionnée dans la masse d'eau ; et
l'application d'une force vers le bas à proximité du point de suspension des flûtes de capteur les plus à l'extérieur latéralement.

9. Procédé selon la revendication 8, dans lequel une profondeur dans l'eau de l'extrémité antérieure de chaque flûte (1) est déterminée en mesurant la pression dans la masse (11) d'eau.

10. Procédé selon la revendication 9, dans lequel l'application d'une force vers le bas comprend la fixation d'un poids (9) à proximité des points de suspension des flûtes de capteur (1) les plus à l'extérieur latéralement.

11. Procédé selon la revendication 8 ou la revendication 9, dans lequel l'application d'une force vers le bas comprend la génération d'une portance hydrodynamique vers le bas à proximité des points de suspension des flûtes de capteur (1) les plus à l'extérieur latéralement.

12. Procédé selon l'une quelconque des revendications 8 à 11, dans lequel les capteurs géophysiques (20) sont des électrodes, des magnétomètres ou des capteurs de température, ou les capteurs géophysiques sont des capteurs sismiques de mouvement de particules et des capteurs de gradient de temps de pression colocalisés.

13. Procédé selon l'une quelconque des revendications 8 à 12, comprenant en outre la détermination de la profondeur dans la masse (11) d'eau de l'extrémité antérieure d'une flûte de capteur (1) en mesurant la rotation d'un treuil (10) disposé sur le dispositif de flottation (3) à partir duquel la flûte de capteur est suspendue, la rotation ajustant la longueur de la ligne (6).
